(19) Europäisches Patentamt
European Patent Office
Office européen des brevets

(11) Veröffentlichungsnummer : **0 007 090**
**B1**

# (12) EUROPÄISCHE PATENTSCHRIFT

(45) Veröffentlichungstag der Patentschrift : **22.10.86**

(51) Int. Cl.[4] : **C 08 L 83/04**, H 01 B 3/46, H 01 B 13/14

(21) Anmeldenummer : **79102360.9**

(22) Anmeldetag : **10.07.79**

## (54) Verfahren zum Isolieren von elektrischen Leitern durch Extrudieren von mittels Radikalbildung vernetzbaren Polysiloxanmassen.

(30) Priorität : **11.07.78 DE 2830377**

(43) Veröffentlichungstag der Anmeldung : **23.01.80 Patentblatt 80/02**

(45) Bekanntmachung des Hinweises auf die Patenterteilung : **22.10.86 Patentblatt 86/43**

(84) Benannte Vertragsstaaten : **BE DE FR GB IT**

(56) Entgegenhaltungen :
**DE-B- 1 020 456**
**DE-B- 1 515 631**
**DE-B- 1 960 795**
**GB-A- 1 351 316**
**US-A- 3 652 475**
**US-A- 4 022 747**
**Die Akte enthält technische Angaben, die nach dem Eingang der Anmeldung eingereicht wurden und die nicht in dieser Patentschrift enthalten sind.**

(73) Patentinhaber : **WACKER-CHEMIE GMBH**
**Prinzregentenstrasse 22**
**D-8000 München 22 (DE)**

(72) Erfinder : **Wolfer, Dietrich, Dr**
**A-5110 Untereching 88 (AT)**
Erfinder : **Patzke, Jörg, Dr.**
**Unghauserstrasse 13**
**D-8263 Burghausen (DE)**

**EP 0 007 090 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Verwendung von zu Elastomeren mittels Radikalbildung vernetzbaren Massen auf Grundlage von hochviskosem Diorganopolysiloxan und Füllstoff zum Isolieren von elektrischen Leitern durch Extrudieren ist bereits bekannt. Hierzu sei z. B. auf GP-PS 1 351 316, veröffentlicht : 24. April 1974, Anmelder : Wacker-Chemie G.m.b.H., wobei dieser Patentschrift FR-PS 2 116 491 entspricht, verwiesen. Gegenüber vorbekannten, zu Elastomeren mittels Radikalbildung vernetzbaren und zum Isolieren von elektrischen Leitern durch Extrudieren geeigneten Massen auf Grundlage von hochviskosem Diorganopolysiloxan und Füllstoff haben die erfindungsgemäßen, erfindungsgemäß hergestellten und/oder erfindungsgemäß verwendeten Massen insbesondere die Vorteile, daß sie rascher extrudiert werden können oder bei gleicher Extrudiergeschwindigkeit die Schnecke des Extruders mit geringerer Geschwindigkeit betrieben werden kann, was geringeren Energieaufwand zur Folge hat, und daß die aus den Massen erzeugten Elastomeren höhere Wärmebeständigkeit haben.

Die aus US-PS 3 652 475 (ausgegeben : 28. März 1972, Tadashi Wada et al., assignors to Shin-Etsu Chemical Company) und US-PS 4 022 747 (ausgegeben : 10. Mai 1977, Kunio Itoh et al., assignors to Shin-Etsu Chemical Company) ebenfalls bereits bekannten, zu Elastomeren mittels Radikalbildung vernetzbaren Massen auf Grundlage von hochviskosem Diorganopolysiloxan, geringen Mengen an von Si-gebundenen, kondensierbaren Gruppen freiem Organopolysiloxan mit einer Viskosität von höchstens 200 mPa · s bei 25 °C und Füllstoff sind wegen eines verhältnismäßig hohen Gehalts an anderen organischen Resten als Methylgruppen schwerer zugänglich bzw. sie ergeben Elastomere mit geringerer Weiterreißfestigkeit, was ebenfalls auf den verhältnismäßig hohen Gehalt an anderen organischen Resten als Methylgruppen zurückzuführen ist.

Durch einen Vergleichsversuch wurde bewiesen, daß Massen, welche im Gegensatz zu den Massen gemäß GB-A-1 351 316 nicht nur niedrigviskoses Dihydroxydimethylpolysiloxan, sondern auch Organopolysiloxan mit einer Viskosität von höchstens 200 mPa · s der oben näher definierten Art enthalten, z. B. leichter verarbeitbar sind.

Die Massen gemäß DE-B-1 020 456 enthaltend mindestens 100 Gewichtsprozent der im Rahmen der Erfindung verwendeten Menge an niedrigviskosem Organopolysiloxan. Da die vorliegende Erfindung keine niedrige Shore-Härte der aus den Massen hergestellten Elastomeren anstrebt, konnte DE-B-1 020 456 die Erfindung auch nicht nahelegen.

Die niedrigviskosen Organopolysiloxane in den Massen gemäß US-A 3 652 475 enthalten mindestens 5 Molprozent Siloxan-Einheiten mit Vinylgruppen.

Gegenstand der Erfindung ist ein Verfahren zum Isolieren von elektrischen Leitern durch Extrudieren von mittels Radikalbildung vernetzbaren Massen auf Grundlage von Diorganopolysiloxan mit einer Viskosität von mindestens $4 \cdot 10^6$ mPa · s bei 25 °C, bei dem mindestens 98 % der Anzahl der organischen Reste Methylreste sind, sowie Füllstoff und Vernetzung der Massen, dadurch gekennzeichnet, daß die Massen auch von Si-gebundenen, kondensierbaren Gruppen freies Organopolysiloxan mit einer Viskosität von höchstens 200 mPa · s bei 25 °C dessen organische Reste Methylreste, gegebenenfalls neben Phenylresten, sind in einer Menge von 0,3 bis 5 Gewichtsprozent, bezogen auf das Gewicht vom Diorganopolysiloxan mit einer Viskosität von mindestens $4 \cdot 10^6$ mPa ·s bei 25 °C, enthalten.

Die Diorganopolysiloxane mit einer Viskosität von mindestens $4 \cdot 10^6$ mPa · s bei 25 °C werden hier vielfach der Einfachheit halber auch als hochviskoses Diorganopolysiloxan (englisch : gum) bezeichnet. Sie sind vorzugsweise solche der allgemeinen Formel

$$Z_nSiR_{3-n}O(SiR_2O)_xSiR_{3-n}Z_n.$$

In dieser Formel bedeutet R gleiche oder verschiedene, einwertige, gegebenenfalls substituierte Kohlenwasserstoffreste, natürlich mit der Maßgabe, daß mindestens 98 % der Anzahl der Reste R Methylreste sind. Z eine Hydroxylgruppe, n 0 oder 1 und x eine Zahl mit einem solchen Wert, daß die Viskosität dieser Diorganopolysiloxane mindestens $4 \cdot 10^6$ mPa · s bei 25 °C beträgt.

In den einzelnen Molekülen der oben angegebenen Formel können auch die Werte für n untereinander gleich oder verschieden sein. Ebenso können die Werte für x verschieden sein.

Innerhalb bzw. entlang der Siloxankette in der oben angegebenen Formel können, was durch derartige Formeln üblicherweise nicht dargestellt wird, zusätzlich zu den Diorganosiloxaneinheiten ($R_2SiO$) andere, meist jedoch nur als mehr oder weniger schwer vermeidbare Verunreinigungen vorliegende Siloxaneinheiten vorhanden sein. Beispiele für solche anderen Siloxaneinheiten sind insbesondere solche der Formeln $RSiO_{3/2}$, $R_3SiO_{1/2}$ und $SiO_{4/2}$, wobei R jeweils die oben dafür angegebene Bedeutung hat. Die Menge an derartigen anderen Siloxaneinheiten beträgt jedoch vorzugsweise höchstens 1 Molprozent von hochviskosem Diorganopolysiloxan.

Beispiele für andere organische Reste als Methylreste im erfindungsgemäß verwendeten hochviskosen Diorganopolysiloxan und somit auch für andere Reste R als Methylreste sind andere Alkylreste als Methylreste, wie der Äthyl-, n-Propyl- und Isopropylrest sowie Octadecylreste : Alkenylreste, wie der Vinyl-, Butadienyl- und Allylrest : cycloaliphatische Kohlenwasserstoffreste, wie der Cyclopentyl- und

Cyclohexylrest sowie Cyclohexenyl- und Methylcyclohexylreste ; Arylreste, wie der Phenylrest ; Aralkylreste, wie der Benzyl- und beta-Phenyläthylrest ; sowie Alkarylreste, wie Tolylreste.

Beispiele für andere organische Reste als Methylreste in den erfindungsgemäß verwendeten hochviskosen Diorganopolysiloxanen sind weiterhin substituierte Kohlenwasserstoffreste R, insbesondere halogenierte Kohlenwasserstoffreste, wie der 3,3,3-Trifluorpropylrest sowie Chlorphenyl- und Bromtolylreste ; ferner Cyanalkylreste, wie der beta-Cyanäthylrest.

Schon wegen der leichteren Zugänglichkeit sind mindestens 98 % der Anzahl der organischen Reste im erfindungsgemäß verwendeten hochviskosen Diorganopolysiloxan Methylreste. Um Elastomere mit besonders guten physikalischen Eigenschaften, z. B. hoher Zugfestigkeit, zu erhalten, ist es jedoch bevorzugt, daß in den erfindungsgemäß verwendeten hochviskosen Diorganopolysiloxanen bei 0,01 bis 1 Molprozent der Siloxaneinheiten einer der organischen Reste ein Vinylrest ist.

Eine entscheidende obere Grenze der Viskosität von erfindungsgemäß verwendetem hochviskosem Diorganopolysiloxan ist nicht bekannt. Die Viskosität von erfindungsgemäß verwendetem Diorganopolysiloxan kann z. B. auch einen im Brabender-Plastograph bei 25 °C und 60 Umdrehungen je Minute bestimmten Wert von 8 000 Nm (800 mkp) haben.

Die organischen Reste im erfindungsgemäß verwendeten, von Si-gebundenen, kondensierbaren Gruppen freien Organopolysiloxan mit einer Viskosität von höchstens 200 mPa · s bei 25 °C sind Methylreste, gegebenenfalls neben Phenylresten. Sind in diesem Organopolysiloxan Phenylreste vorhanden, so stellen diese Reste vorzugsweise 2 bis 50 % der Anzahl der organsichen Reste in diesem Organopolysiloxan dar. Vorzugsweise ist das von Si-gebundenen, kondensierbaren Gruppen freies Organopolysiloxan mit einer Viskosität von höchstens 200 mPa · s bei 25 °C ein durch Trimethylsiloxygruppen endblockiertes Diorganopolysiloxan. Es kann aber auch in diesem Organopolysiloxan mindestens eine Diorganosiloxaneinheit ($R_2'SiO$ ; R' = Methyl oder Phenyl) z. B. durch

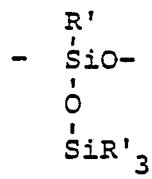

wobei R' die vorstehend dafür angegebene Bedeutung hat, ersetzt sein. Phenylreste liegen vorzugsweise in Phenylmethylsiloxan- und/oder Diphenylsiloxaneinheiten vor.

Vorzugsweise hat von Si-gebundenen, kondensierbaren Gruppen freies Organopolysiloxan mit einer Viskosität von höchstens 200 mPa · s bei 25 °C eine Viskosität von mindestens 80 mPa · s bei 25 °C.

Als Füllstoff ist solcher mit einer Oberfläche von mindestens 50 $m^2/g$ bevorzugt. (Die in dieser Beschreibung angegebenen Werte für Oberflächengrößen von Füllstoffen sind BET-Werte, also Werte, die durch Stickstoffadsorption gemäß ASTM Special Technical Publication, No. 51, 1941, Seite 95 ff., bestimmt werden). Beispiele für derartige Füllstoffe sind insbesondere pyrogen erzeugte Siliciumdioxyde, unter Erhaltung der Struktur entwässerte Kieselsäure-Hydrogele und andere Arten von gefälltem Siliciumdioxyd mit einer Oberfläche von mindestens 50 $m^2/g$ und Metalloxyde, wie Titandioxyd, Ferrioxyd, Aluminiumoxyd und Zinkoxyd, soweit sie jeweils eine Oberfläche von mindestens 50 $m^2/g$ aufweisen.

Füllstoff mit einer Oberfläche von mindestens 50 $m^2/g$ wird vorzugsweise in Mengen von 10 bis 100 Gewichtsprozent, bezogen auf das Gewicht von hochviskosem Diorganopolysiloxan, eingesetzt.

Zumindest zusätzlich zu Füllstoff mit einer Oberfläche von mindestens 50 $m^2/g$ kann Füllstoff mit einer Oberfläche von weniger als 50 $m^2/g$ eingesetzt werden. Beispiele für derartige Füllstoffe sind bzw. können sein : Quarzmehl, Diatomeenerde, Neuburger Kreide (englisch : Neuburg Chalk), Calciumsilikat, Zirkoniumsilikat, Calciumcarbonat, z. B. in Form von gemahlener Kreide, und calciniertes Aluminiumsilikat.

Alle oben genannten Füllstoffe mit einer Oberfläche von mindestens 50 $m^2/g$ können ebenso wie die Füllstoffe mit einer Oberfläche von weniger als 50 $m^2/g$ hydrophobiert sein, beispielsweise durch Behandlung mit Trimethyläthoxysilan oder Stearinsäure. Falls erwünscht, kann eine solche Behandlung z. B. in einer Kugelmühle durchgeführt worden sein (vgl. DE-OS 2 343 846, Anmelder : Wacker-Chemie GmbH, offengelegt : 13. März 1975). Es gehört jedoch zu den großen Vorteilen der Erfindung, daß ausgezeichnete Ergebnisse auch ohne eine derartige, verhältnismäßig aufwendige Behandlung erzielt werden.

Selbstverständlich können die erfindungsgemäß verwendeten Massen zusätzlich zu hochviskosem Diorganopolysiloxan, von Si-gebundenen, kondensierbaren Gruppen freiem Organopolysiloxan mit einer Viskosität von höchstens 200 mPa · s bei 25 °C, dessen organische Reste Methylreste, gegebenenfalls neben Phenylresten, sind, Füllstoff und gegebenenfalls Radikale bildendem Mittel Zusätze enthalten, die auch bisher zusätzlich zu hochviskosem Organopolysiloxan, Füllstoff und gegebenenfalls Radikale bildendem Mittel bei der Bereitung von zu Elastomeren vernetzbaren Massen eingesetzt werden konnten. Beispiele für derartige Zusätze sind Mittel zur Verhinderung der Verstrammung der Massen beim Lagern,

wie niedermolekulare Siloxanole oder Alkoxysilane, Pigmente, Antioxydantien, Zusätze zur Verminderung des Druckverformungsrestes (englisch : compression set), Hitzestabilisatoren, flammabweisend machende Mittel, Lichtschutzmittel sowie die elektrischen Eigenschaften der Elastomeren in gewünschter Weise beeinflussende Mittel, wie leitfähiger Kohlenstoff.

Füllstoffe mit einer Oberfläche von weniger als 50 $m^2/g$ werden ebenso wie die im vorstehenden Absatz genannten Zusätze vorzugsweise in Mengen von 0 bis 100 Gewichtsprozent, bezogen auf das Gewicht von hochviskosem Diorganopolysiloxan eingesetzt.

Zur Bereitung der erfindungsgemäß verwendeten Massen können alle Bestandteile der jeweiligen Masse in beliebiger Reihenfolge miteinander vermischt werden.

Vorzugsweise werden die erfindungsgemäß verwendeten Massen jedoch dadurch hergestellt, daß von Si-gebundenen, kondensierbaren Gruppen freies, eine Viskosität von höchstens 200 mPa · s bei 25 °C aufweisendes Organopolysiloxan dessen organische Reste Methylreste, gegebenenfalls neben Phenylresten, sind, mit eine Viskosität von mindestens $4 \cdot 10^6$ mPa · s bei 25 °C aufweisendem Diorganopolysiloxan gleichzeitig und/oder nach Zugabe von Füllstoff und vor Zugabe eines Radikale bildenden Mittels vermischt wird.

Dabei ist besonders bevorzugt, einen Teil, insbesondere die Hälfte, der jeweils verwendeten Menge an von Si-gebundenen, kondensierbaren Gruppen freiem, eine Viskosität von höchstens 200 mPa · s bei 25 °C aufweisendem Organopolysiloxan unmittelbar nach Zugabe von Füllstoff und den Rest dieser Menge unmittelbar vor Beendigung des Mischvorgangs zuzugeben.

Erfolgt die Zugabe von von Si-gebundenen, kondensierbaren Gruppen freiem, eine Viskosität von höchstens 200 mPa · s bei 25 °C aufweisendem Organopolysiloxan gleichzeitig mit dem Füllstoff, so kann dieses Organopolysiloxan im Gemisch mit zumindest einem Teil der jeweils verwendeten Menge an Füllstoff oder getrennt vom Füllstoff zugegeben werden.

Das Vermischen der Bestandteile der erfindungsgemäß verwendeten Massen, mit Ausnahme von Radikale bildendem Mittel, wird vorzugsweise bei einer Temperatur im Bereich von 0 bis 200 °C durchgeführt.

Vorzugsweise werden die erfindungsgemäß zu verwendenden Massen in einem Kneter vermischt. Falls erwünscht, kann das Vermischen auch in einem Walzwerk, z. B. beim Einmischen von Pigment und/oder vor dem Einmischen von Radikale bildendem Mittel, durchgeführt werden, gegebenenfalls nachdem vorher bereits ein Kneter zum Vermischen eines Teiles der Bestandteile der erfindungsgemäßen Massen eingesetzt wurde.

Die unvernetzten Massen können ohne besondere Formgebung oder in Form von Bändern oder Granulaten vorliegen.

Die Radikalbildung für die Vernetzung der Massen kann durch die gleichen Mittel bewirkt werden, durch die auch bisher die Radikalbildung für die Vernetzung von Massen auf Gsrundlage von Diorganopolysiloxanen und Füllstoff bewirkt wurde. Beispiele für solche Mittel sind insbesondere peroxydische Verbindungen, wie Acylperoxyde, z. B. Dibenzoylperoxyd, Bis-(4-chlorbenzoyl)-peroxyd und Bis-(2,4-dichlorbenzoyl)-peroxyd ; Alkylperoxyde und Arylperoxyde, wie Di-tert.-butylperoxyd und Dicumylperoxyd ; Perketale, wie 2,5-Bis-(tert.-butylperoxy)-2,5-dimethylhexan ; sowie Perester, wie Diacetylperoxydicarbonat, tert.-Butylperbenzoat, tert.-Butylperoxyisopropylcarbonat und tert.-Butylperisononanoat ; ferner tert.-Butyl-beta-hydroxyäthylperoxyd und als Radikale bildende Mittel bekannte Azoverbindungen, wie Azoisobuttersäurenitril. Die Radikalbildung kann jedoch auch z. B. durch Hochenergiestrahlen, wie alpha-, beta- oder gamma-Strahlen, erfolgen.

Die Vernetzung der erfindungsgemäß verwendeten Massen mittels Radikalbildung kann bei den für die Vernetzung von Massen auf Grundlage von Diorganopolysiloxan und Füllstoff durch Radikalbildung üblichen Temperaturen und Drücken erfolgen. Die dabei bei Verwendung von Radikale bildenden Mitteln, wie peroxydischen Verbindungen oder Azoverbindungen, angewandten Temperaturen liegen meist im Bereich von 100 bis 220 °C.

Die folgenden Angaben von Teilen beziehen sich auf das Gewicht, soweit nichts anderes angegeben ist.

## Beispiel

100 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von $8 \cdot 10^6$ mPa · s bei 25 °C werden in einem bei 150 °C betriebenen Kneter zunächst mit 50 Teilen pyrogen in der Gasphase erzeugtem Siliciumdioxyd mit einer Oberfläche von 200 $m^2/g$, dann mit 1 Teil durch Trimethylsiloxygruppen endblockiertem Dimethylpolysiloxan mit einer Viskosität von 96 mPa · s bei 25 °C, dann mit 7 Teilen eines in den endständigen Einheiten je eine Si-gebundene Hydroxylgruppe aufweisenden Dimethylpolysiloxans mit einer Viskosität von 40 mPa · s bei 25 °C, dann erneut mit 1 Teil durch Trimethylsiloxygruppen endblockiertem Dimethylpolysiloxan mit einer Viskosität von 96 mPa · s bei 25 °C und schließlich mit 2,8 Teilen einer Paste aus gleichen Teilen Bis-(2,4-dichlorbenzoyl)-peroxyd und eines durch Trimethylsiloxygruppen endblockierten Dimethylpolysiloxans mit einer Viskosität von 250 mPa · s bei 25 °C vermischt.

Vergleichsversuch

Die im Beispiel beschriebene Arbeitsweise wird wiederholt mit der Abänderung, daß kein durch Trimethylsiloxygruppen endblockiertes Dimethylpolysiloxan mit einer Viskosität von 96 mPa · s bei 25 °C mitverwendet wird.

Mit den Massen gemäß dem Beispiel und dem Vergleichsversuch wird ein elektrischer Leiter (Litze 1,5 $mm^2$) durch Extrudieren isoliert. Dabei wird ein Extruder mit Schnecke 45/10 D und Querspritzkopf verwendet. Die Dicke der unvernetzten Isolierung beträgt 0,6 mm. Die Temperatur des Heizkanals ist 350 °C, die Verweilzeit des umspritzten elektrischen Leiters in diesem Heizkanal beträgt 20 Sekunden.

Für die Masse gemäß dem Beispiel genügen bei einer Abzugsgeschwindigkeit von 18 m/Minute 12 Umdrehungen der Schnecke je Minute. Für die Masse gemäß dem Vergleichsversuch sind dagegen bei gleicher Abzugsgeschwindigkeit 23 Umdrehungen der Schnecke je Minute erforderlich.

Tabelle

| Masse gemäß | Eigenschaften der Isolierung | | | |
|---|---|---|---|---|
| | nach 10 Tagen bei 25 °C auf dem Leiter | | nach 10 Tagen bei 200 °C auf dem Leiter | |
| | Zugfestigkeit $N/mm^2$ | Bruchdehnung % | Zugfestigkeit $N/mm^2$ | Bruchdehnung % |
| Beispiel | 9,3 | 420 | 7,8 | 330 |
| Vergleichsversuch | 9,4 | 400 | 7,2 | 260 |

Die obige Angabe « 45/10 D » ist eine Dimensionsangabe für Extrudierschnecken und bedeutet das Verhältnis des Schneckendurchmessers in mm zur Länge der Schnecke, angegeben als ganzzahliges Vielfaches des Durchmessers.

**Patentanspruch**

Verfahren zum Isolieren von elektrischen Leitern durch Extrudieren von mittels Radikalbildung vernetzbaren Massen auf Grundlage von Diorganopolysiloxan mit einer Viskosität von mindestens $4 \cdot 10^6$ mPa · s bei 25 °C, bei dem mindestens 98 % der Anzahl der organischen Reste Methylreste sind, sowie Füllstoff und Vernetzung der Massen, dadurch gekennzeichnet, daß die Massen auch von Si-gebundenen, kondensierbaren Gruppen freies Organopolysiloxan mit einer Viskosität von höchstens 200 mPa · s bei 25 °C dessen organische Reste Methylreste, gegebenenfalls neben Phenylresten, sind in einer Menge von 0,3 bis 5 Gewichtsprozent, bezogen auf das Gewicht vom Diorganopolysiloxan mit einer Viskosität von mindestens $4 \cdot 10^6$ mPa · s bei 25 °C, enthalten.

**Claim**

Process for insulating electrical conductors by extrusion of compositions that can be cross-linked by means of radical formation and are based on a diorganopolysiloxane having a viscosity of a least $4 \cdot 10^6$ mPa · s at 25 °C, in which diorganopolysiloxane at least 98 % of the organic radicals are methyl radicals, and also a filler and by cross-linking of the compositions, characterised in that the compositions also contain an organopolysiloxane that is free of Si-bonded condensable groups and has a viscosity of at most 200 mPa · s at 25 °C and the organic radicals of which are methyl radicals, optionally with phenyl radicals, in a quantity of from 0.3 to 5 per cent by weight, calculated on the weight of the diorganopolysiloxane having a viscosity of at least $4 \cdot 10^6$ mPa · s at 25 °C.

**Revendication**

Procédé d'isolation de conducteurs électriques par extrusion de masses réticulables par voie radicalaire à base de polydiorganosiloxane ayant une viscosité d'au moins $4 \cdot 10^6$ mPa · s à 25 °C, où au moins 98 % du nombre des radicaux organiques sont des radicaux méthyle, ainsi que d'une charge, et réticulation des masses, caractérisé en ce que les masses contiennent aussi un polyorganosiloxane exempt de groupes condensables et fixés à Si, ayant une viscosité au plus égale à 200 mPa · s à 25 °C,

dont les radicaux organiques sont des radicaux méthyle, éventuellement en plus de radicaux phényle, en une quantité de 0,3 à 5 % en poids, sur la base du poids du polydiorganosiloxane ayant une viscosité d'au moins $4 \cdot 10^6$ mPa · s à 25 °C.